# FASCICULE DE BREVET EUROPEEN

(11) **EP 0 771 691 B1**
(45) Date de publication et mention de la délivrance du brevet: **23.02.2000**
(21) Numéro de dépôt: 96402355.0
(22) Date de dépôt: 06.11.1996
(51) Int. Cl.: B60Q 1/30

(54) **Feu du signalisation pour lunette arrière à visière bi-matière**
Signalleuchte mit Schirm aus zwei Materialien für Fahrzeugheckscheibe
Vehicle rear window signal light with screen made of two materials

(30) Priorité: 06.11.1995 FR 9513085
(43) Date de publication de la demande: 07.05.1997
(73) Titulaire: VALEO VISION, 93000 Bobigny (FR)
(72) Inventeur: Cardoso, Daniel, 81200 Mazamet (FR)
(74) Mandataire: Le Forestier, Eric

(56) Documents cités:
- EP-A- 0 648 642
- DE-A- 4 035 639
- DE-A- 4 407 111

## Description

La présente invention se rapporte à un feu de signalisation surélevé, notamment un feu stop, pour la lunette arrière d'un véhicule automobile.

Il est désormais classique d'équiper un véhicule soit en usine, soit ultérieurement, d'un feu de signalisation arrière surélevé, tel qu'un feu stop, que l'on place à l'intérieur de l'habitacle du véhicule, au voisinage de la lunette arrière.

Un tel feu permet par exemple de mieux signaler un freinage au véhicule qui suit. Il est soit fixé sur la plage arrière du véhicule, soit fixé, par exemple collé, directement sur la lunette arrière, soit encore fixé sur la carrosserie avoisinante du véhicule, avec accostage sur la lunette arrière.

Le feu comprend une visière qui est constituée d'une pièce d'isolement optique entre le feu lui-même et la lunette arrière. Cette pièce a également une fonction esthétique.

A ce jour, la visière est généralement un élément rigide qui est en contact avec la lunette arrière par l'intermédiaire de joints qui entourent au moins partiellement la visière et qui sont destinés à éviter les bruits ou fuites de lumière.

Actuellement, la visière est soit entièrement noire, soit peinte en noir dans sa partie visible de l'extérieur du véhicule.

Les garnitures intérieures des véhicules sont le plus souvent d'une autre couleur que le noir. Or, les stylistes qui définissent la décoration intérieure des véhicules exigent la plupart du temps que la visière de ces feux stop complémentaires présente extérieurement la même couleur que celle des garnitures intérieures, le côté interne de la visière étant toujours de couleur noire.

Ces visières sont le plus souvent fabriquées sous la forme de deux pièces indépendantes assemblées ultérieurement et sur lesquelles un joint de couleur noire est rapporté.

Il s'agit donc de trois pièces à assembler, ce qui augmente notablement les probabilités de défauts de qualité, notamment quant à la tenue du joint, ainsi que le prix de revient du feu.

La présente invention a pour but de pallier ces inconvénients, c'est-à-dire de fournir un feu signalisation qui comporte une visière formée de deux parties externe et interne moulées et réalisées dans des couleurs différentes, qui soit de qualité constante, par réduction du nombre de pièces qui la constituent.

Un autre objectil est, par là même, de réduire le prix de revient du feu.

Ces objectifs, ainsi que d'autres, sont atteints, conformément à l'invention, par le fait que le joint est d'un seul tenant avec au moins la partie interne.

De cette façon, on réduit le nombre de pièces qui constituent le feu, et par voie de conséquence, on augmente la qualité du produit tout en abaissant son coût.

Par ailleurs, selon d'autres caractéristiques avantageuses mais non limitatives:
- ladite partie interne et ledit joint forment une seule et unique pièce sur laquelle est surmoulée ladite partie externe, ou inversement ;
- ladite partie interne et ledit joint forment une seule et unique pièce sur laquelle ladite partie externe est mise en place mécaniquement, notamment par encliquetage;
- ledit joint est un joint à lèvre ;
- ladite partie interne est surmoulée sur la partie externe, ledit joint étant surmoulé sur l'ensemble formé des deux parties ;
- ledit joint est surmoulé sur la partie interne, la partie externe étant surmoulée sur l'ensemble ainsi formé ;
- la partie externe comporte au moins une cloison transversale, en contact avec au moins une cloison similaire formée dans la partie interne ;
- la partie interne comporte des retours de matière dont au moins un est situé sur ladite cloison, aptes à autoriser la mise en place mécanique de la partie externe ;
- lesdites parties externe et interne sont réalisées dans des matériaux différents;
- lesdites parties externe et interne sont réalisées dans des matériaux identiques ou similaires de couleurs différentes.

D'autres caractéristiques et avantages de l'invention apparaîtront de la description détaillée qui va suivre, de certains modes de réalisation. Cette description sera faite en référence aux dessins annexés dans lesquels :
- la figure 1 est une vue simplifiée d'une première forme de réalisation de l'invention, selon un plan de coupe longitudinal et vertical passant par une partie latérale du feu ;
- la figure 2 est une vue analogue à la figure 1, le plan de coupe passant par la partie médiane du feu ;
- les figures 3 et 4 sont des vues similaires aux figures 1 et 2, d'un deuxième mode de réalisation ;
- les figures 5 et 6 sont des vues similaires, d'un troisième mode de réalisation ;
- la figure 7 est une vue schématique d'une variante de réalisation du feu de la figure 1.

En référence aux figures, on a représenté un feu de signalisation constitué par un feu stop surélevé destiné à être plaqué contre la lunette arrière **G** d'un véhicule automobile.

Ce feu de signalisation comprend classiquement un boîtier ou socle 1 en matière plastique moulée par lequel il est monté sur la lunette **G**. Ce boîtier 1 comprend une paroi inférieure 20 généralement plane et, à partir de cette paroi, en direction de l'intérieur de l'habitacle du véhicule (vers la gauche), un retour courbe 21 vers le haut se terminant par un bord libre légèrement incliné par rapport à la verticale.

A l'extrémité opposée au retour, la paroi 20 se termine par un bord pourvu d'un joint ou garniture d'étanchéité généralement indiqué par la référence numérique 4.

Le boîtier abrite des moyens, non représentés par souci de clarté, pour engendrer un faisceau de signalisation stop, constitués classiquement en soi par une ou plusieurs sources lumineuses (et notamment plusieurs diodes électroluminescentes), des moyens récupérateurs de flux (réflecteurs) et le cas échéant un écran transparent ou translucide.

De manière connue en soi, la visière ou boîtier du feu stop est constitué de deux parties externe et interne moulées portant respectivement les références 2 et 3. Ces deux parties sont par exemple réalisées dans des couleurs différentes. A titre exemplatif, la partie interne 3 est noire tandis que la partie externe 2 est beige. Les matériaux utilisés peuvent être de même nature ou de nature différente.

Dans ses régions latérales, la partie externe 2 porte une petite cloison transversale 22 qui s'étend verticalement en direction de la lunette **G**. Dans sa région médiane, elle est pourvue d'une sorte de petit muret 23 dans lequel est formée une rainure longitudinale. Cette rainure est destinée à recevoir un écran transparent ou translucide.

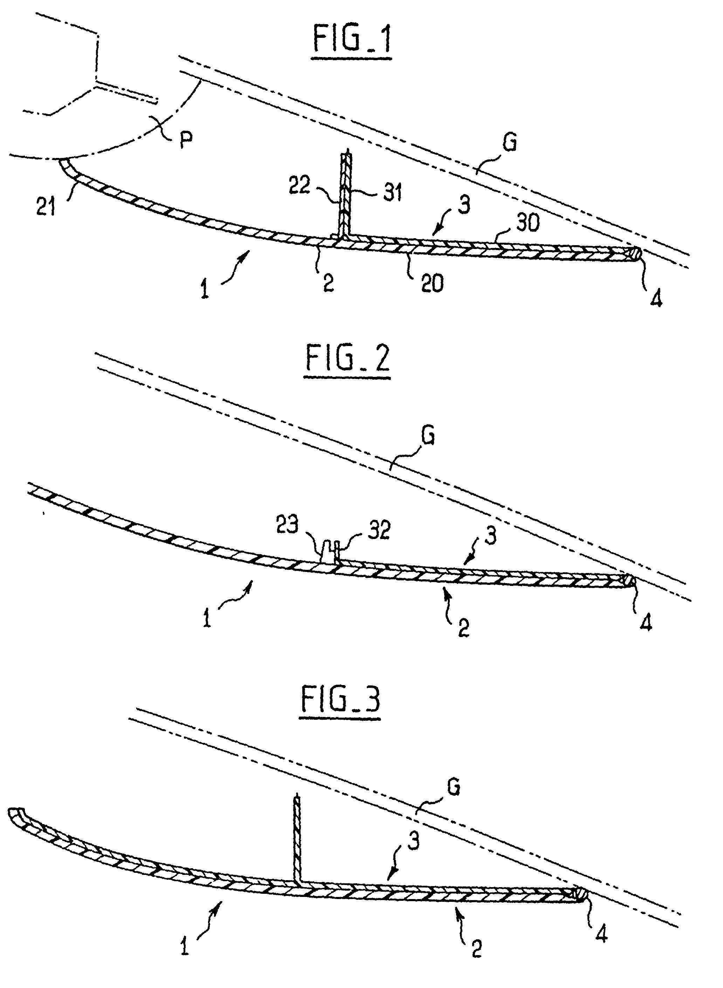

Conformément à l'invention, le feu de signalisation représenté aux figures 1 et 2 se caractérise par le fait que le joint 4 est d'un seul tenant avec au moins la partie interne 3.

Plus précisément, la partie interne 3 est surmoulée sur la partie externe 2. Ce surmoulage est réalisé par exemple dans un moule rotatif ou en reprise. La partie interne 3 forme avec le joint d'étanchéité 4 une seule et unique pièce. Ceci permet de compenser des écarts importants entre la lunette **G** et la visière, c'est-à-dire les variations de dimensions rencontrées d'une lunette à l'autre ainsi que les dispersions dues au montage du feu sur la vitre ou sur la carrosserie.

Le joint 4 est de préférence à lèvre ou de toute autre forme apte à compenser les variations de dimensions.

On notera que la partie 3 s'étend, le long de la partie 2, seulement dans la région délimitée par la cloison 22 et le muret 23, ainsi que l'extrémité de la visière en contact avec la lunette **G**. A cette fin, la partie 3 comporte elle aussi une cloison 31 et une saillie 32 aptes à s'appliquer respectivement contre la cloison 22 et le muret 23.

La couleur noire de la partie 3 peut être obtenue par exemple grâce à l'utilisation d'un polyuréthane thermoplastique, en abrégé TPU (marque DESMOPAN). Cet élastomère possède de bonnes propriétés d'adhérence sur la partie 2, laquelle est réalisée de préférence en polycarbonate ou en copolymère polycarbonate/poly (styrène/butadiène/acrylonitrile).

On notera que l'élastomère n'engendre pas de contrainte sur la partie 2 et que la tenue du joint est garantie.

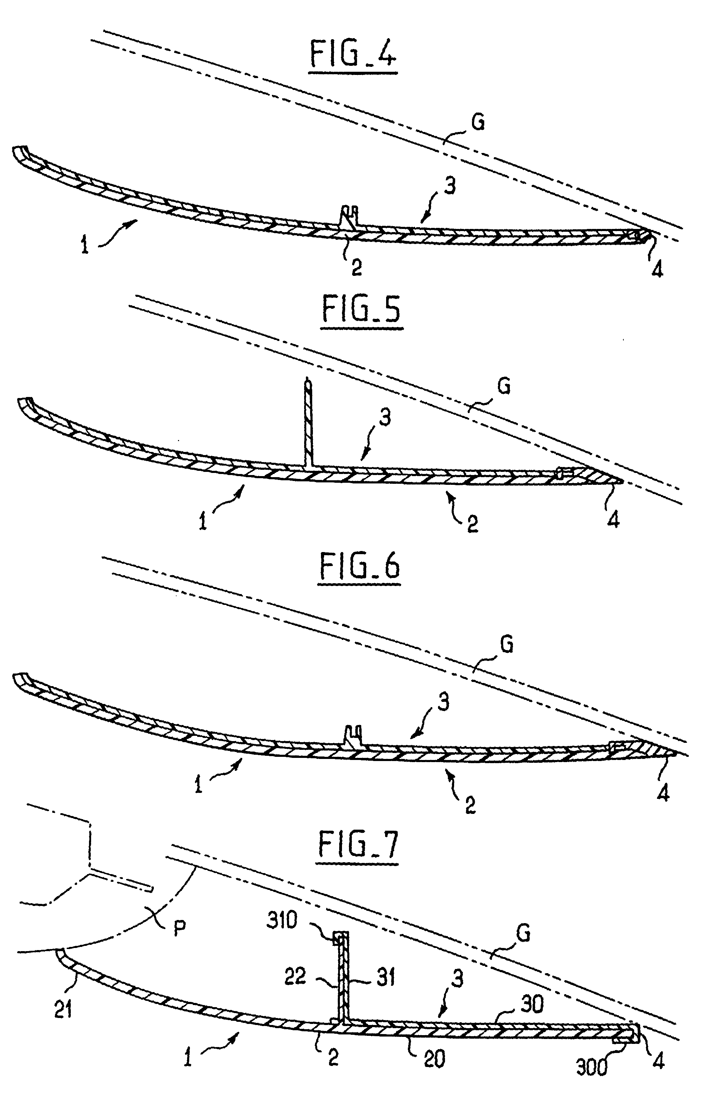

Dans la forme de réalisation de la figure 7, la partie 3 est également d'une seule pièce avec le joint 4, mais cette pièce unique est mise en place mécaniquement sur la partie 2. A cette fin, elle comporte des retours de matière 300 et 310 permettant de la "chausser", par exemple par encliquetage, sur la partie 2. Ces retours sont disposés respectivement au niveau du joint 4 et de la cloison 31.

Dans la forme de réalisation des figures 3 et 4, les parties 2 et 3 sont surmoulées l'une sur l'autre, le joint 4, prévu au départ indépendant, étant surmoulé à son tour sur l'ensemble ainsi formé.

Comme le montrent les figures, la partie 3 recouvre totalement la partie 2, ceci afin d'éviter un risque de gauchissement après surmoulage.

De cette façon, le surmoulage d'une pièce sur l'autre a pour conséquence qu'elles ne forment en définitive qu'une pièce d'un seul tenant.

On notera que le nappage des deux pièces 2 et 3 l'une sur l'autre étant total, il n'y a pas de risque de gauchissement de l'ensemble surmoulé.

Enfin, dans la forme de réalisation des figures 5 et 6, on moule d'abord par injection la partie 3 sur laquelle on positionne le joint 4, après quoi on surmoule la partie 2 sur l'ensemble ainsi formé.

De manière générale, la partie 2 comporte sur sa face visible inférieure des reliefs présentant un aspect grainé (peau d'orange). Cette partie étant moulée en dernier, elle n'est pas sujette à réchauffement de sorte que l'aspect grainé de la face visible reste inchangé.

## Revendications

1. Feu de signalisation pour lunette arrière de véhicule automobile, qui comporte une visière (1) formées de deux parties externe (2) et interne (3) moulées, réalisées dans des couleurs différentes, et un joint (4) destiné à assurer une étanchéité optique par contact avec la lunette arrière (G), caractérisé en ce que ledit joint (4) est d'un seul tenant avec au moins la partie interne (3).

2. Feu de signalisation selon la revendication 1, caractérisé en ce que ladite partie interne (3) et ledit joint (4) forment une seule et unique pièce sur laquelle est surmoulée ladite partie externe (2).

3. Feu de signalisation selon la revendication 1, caractérisé en ce que ladite partie interne (3) et ledit joint (4) forment une seule et unique pièce surmoulée sur ladite partie externe (2).

4. Feu de signalisation selon la revendication 1, caractérisé en ce que ladite partie interne (3) et ledit joint (4) forment une seule et unique pièce sur laquelle ladite partie externe (2) est mise en place mécaniquement, notamment par encliquetage.

5. Feu de signalisation selon l'une des revendications 1 à 4, caractérisé en ce que ledit joint (4) est un joint à lèvre.

6. Feu de signalisation selon la revendication 1, caractérisé en ce que ladite partie interne (3) est surmoulée sur la partie externe (2), ledit joint (4) étant surmoulé sur l'ensemble formé des deux parties (2, 3).

7. Feu de signalisation selon la revendication 1, caractérisé en ce que ledit joint (4) est surmoulé sur la partie interne (3), la partie externe (2) étant surmoulée sur l'ensemble (3, 4) ainsi formé.

8. Feu de signalisation selon l'une des revendications 1 à 7, caractérisé en ce que la partie externe (2) comporte au moins une cloison transversale (22), en contact avec au moins une cloison similaire (31) formée dans la partie interne (3).

9. Feu de signalisation selon les revendications 4 et 8 prises en combinaison, caractérisé en ce que la partie interne (3) comporte des retours de matière (300, 310) dont au moins un est situé sur ladite cloison (31), aptes à autoriser la mise en place mécanique de la partie externe (2).

10. Feu de signalisation selon l'une des revendications 1 à 9, caractérisé en ce que lesdites parties externe (2) et interne (3) sont réalisées dans des matériaux différents.

11. Feu de signalisation selon l'une des revendications 1 à 8, caractérisé en ce que lesdites parties externe (2) et interne (3) sont réalisées dans des matériaux identiques ou similaires de couleurs différentes.

## Patentansprüche

1. Signalleuchte für die Heckscheibe eines Kraftfahrzeugs, die einen Abdeckschirm (1), der aus zwei in unterschiedlichen Farben ausgeführten Formteilen, einem äußeren (2) und einem inneren Teil (3), besteht, und eine Dichtung (4) umfaßt, um eine optische Abdichtung durch Kontakt mit der Heckscheibe (G) zu gewährleisten, **dadurch gekennzeichnet,** daß die besagte Dichtung (4) einstückig zumindest mit dem inneren Teil (3) ausgeführt ist.

2. Signalleuchte nach Anspruch 1, **dadurch gekennzeichnet,** daß der besagte innere Teil (3) und die besagte Dichtung (4) ein einziges und einheitliches Element bilden, auf dem der besagte äußere Teil (2) aufgeformt ist.

3. Signalleuchte nach Anspruch 1, **dadurch gekennzeichnet,** daß der innere Teil (3) und die besagte Dichtung (4) ein einziges und einheitliches Element bilden, das auf dem besagten äußeren Teil (2) aufgeformt ist.

4. Signalleuchte nach Anspruch 1, **dadurch gekennzeichnet,** daß der besagte innere Teil (3) und die besagte Dichtung (4) ein einziges und einheitliches Element bilden, an dem der besagte äußere Teil (2) mechanisch, insbesondere durch Verrasten, eingesetzt ist.

5. Signalleuchte nach einem der Ansprüche 1 bis 4, **dadurch gekennzeichnet,** daß die besagte Dichtung (4) eine Lippendichtung ist.

6. Signalleuchte nach Anspruch 1, **dadurch gekennzeichnet,** daß der besagte innere Teil (3) auf dem äußeren Teil (2) aufgeformt ist, während die besagte Dichtung (4) auf der durch die beiden Teile (2, 3) gebildeten Einheit aufgeformt ist.

7. Signalleuchte nach Anspruch 1, **dadurch gekennzeichnet,** daß die besagte Dichtung (4) auf dem inneren Teil (3) aufgeformt ist, während der äußere Teil (2) auf der so gebildeten Einheit (3, 4) aufgeformt ist.

8. Signalleuchte nach einem der Ansprüche 1 bis 7, **dadurch gekennzeichnet,** daß der äußere Teil (2) wenigstens eine Querzwischenwand (22) umfaßt, die mit wenigstens einer im inneren Teil (3) ausgebildeten ähnlichen Zwischenwand (31) in Kontakt kommt.

9. Signalleuchte nach den Ansprüchen 4 und 8 in Kombination, **dadurch gekennzeichnet,** daß der innere Teil (3) einstückige Rücksprünge (300, 310) umfaßt, von denen sich wenigstens einer auf der besagten Zwischenwand (31) befindet und die das mechanische Einsetzen des äußeren Teils (2) ermöglichen können.

10. Signalleuchte nach einem der Ansprüche 1 bis 9, **dadurch gekennzeichnet,** daß der besagte äußere (2) und innere Teil (3) aus unterschiedlichen Werkstoffen ausgeführt sind.

11. Signalleuchte nach einem der Ansprüche 1 bis 8, **dadurch gekennzeichnet,** daß der besagte äußere (2) und innere Teil (3) aus identischen oder ähnlichen Werkstoffen in unterschiedlichen Farben ausgeführt sind.

## Claims

1. An indicating light for a motor vehicle rear window, which includes a visor (1) formed in two moulded parts made in different colours, namely an outer part (2) and an internal part (3), and a gasket (4) for giving optical sealing by contact with the rear window (G), characterised in that the said gasket (4) is integral with at least the inner part (3).

2. An indicating light according to Claim 1, characterised in that the said inner part (3) and the said gasket (4) constitute a single and sole member, on which the said outer part (2) is formed by moulding.

3. An indicating light according to Claim 1, characterised in that the said inner part (3) and the said gasket (4) constitute a single and sole member which is formed by moulding on the said outer part (2).

4. An indicating light according to Claim 1, characterised in that the inner part (3) and the said gasket (4) constitute a single and sole member on which the said outer part (2) is fitted mechanically, especially by snap-fitting.

5. An indicating light according to one of Claims 1 to 4, characterised in that the said gasket (4) is a lipped gasket.

6. An indicating light according to Claim 1, characterised in that the said inner part (3) is formed on the outer part (2) by moulding, the said gasket (4) being formed by moulding on the assembly that consists of the two parts (2, 3).

7. An indicating light according to Claim 1, characterised in that the said gasket (4) is formed on the inner part (3) by moulding, the outer part (2) being applied by moulding on the assembly (3, 4) thus formed.

8. An indicating light according to one of Claims 1 to 7, characterised in that the outer part (2) includes at least one transverse partition (22) in contact with at least one similar partition (31) formed in the inner part (3).

9. An indicating light according to Claims 4 and 8 taken in combination, characterised in that the inner part (3) includes integral return flanges (300, 310), at least one of which is situated on the said partition (31), the flanges being adapted to enable the outer part (2) to be fitted mechanically in position.

10. An indicating light according to one of Claims 1 to 9, characterised in that the said outer part (2) and inner part (3) are made of different materials.

11. An indicating light according to one of Claims 1 to 8, characterised in that the said outer part (2) and inner part (3) are made in materials which are identical or similar, but of different colours.
